# EUROPEAN PATENT APPLICATION

(11) **EP 4 524 902 A1**
(43) Date of publication of application: **19.03.2025**
(21) Application number: 24190301.2
(22) Date of filing: 23.07.2024
(51) Int. Cl.: G06V 10/46, G06V 10/82, G06V 20/80, G06V 30/18

(54) **DIGITAL FINGERPRINTING SYSTEM AND METHOD FOR COMPOSITE FOOD PACKAGES**

(30) Priority: 14.09.2023 IT 202300018891
(71) Applicant: Tetra Laval Holdings & Finance S.A., 1009 Pully (CH)
(72) Inventor: EGIDI, Sara, 41123 MODENA (IT); BORELLI, Gabriele, 41123 MODENA (IT); LAX, Manuela, 41123 MODENA (IT); CORAZZARI, Gianni, 41123 MODENA (IT); BALTIERI, Davide, 41123 MODENA (IT); CATTOZZI, ,Davide, 41123 MODENA (IT); BATTILANI, Fabio, 41123 MODENA (IT)
(74) Representative: Tetra Pak - Patent Attorneys SE

(57) **Abstract**

There is described a digital fingerprinting method (1) to provide digital fingerprints of composite packages (4) produced in a packaging line (30), which envisages: receiving an image of a portion of a composite package (4) acquired by an imaging device (2) and having a printed pattern including a group of printed symbols; identifying the printed symbols in the image; and processing this image to extract a fingerprint of the composite package (4) constituting a unique identifier of the composite package (4), based on unique printing features of the printed pattern.

## Description

### TECHNICAL FIELD

The present invention relates to a digital fingerprinting system and method for packages, in particular for traceability of composite packages filled with a pourable product, more in particular with a pourable food product.

### BACKGROUND ART

As is known, many liquid or pourable food products, such as fruit juice, UHT (ultra-high-temperature treated) milk, wine, tomato sauce, etc., are packaged in sealed composite packages made of a sterilized multilayer packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g., polyethylene. In the case of aseptic packages for long-storage products, the packaging material also comprises a layer of oxygen-barrier material, e.g., an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, some of which advance a web of packaging material through a sterilization unit of the packaging machine for sterilizing the web of packaging material. Then, the sterilized web of packaging material is maintained and advanced within an isolation chamber and is folded and sealed longitudinally to form a tube, which is further advanced. The tube is filled with a pourable product and is transversally sealed and cut along equally spaced transversal cross sections within a package forming apparatus of the packaging machine during advancement of the tube.

Traceability of packaged products is generally implemented through the use of data matrices, QR codes or barcodes, that are printed directly on the external surface of the packages to allow consumers to identify purchased products and prove their authenticity.

However, being simply printed on the surface of the product packages makes these printed codes highly susceptible to counterfeiting: this is a critical problem, which may cause various negative impacts not only for the consumers, but also for enterprises and the whole economic ecosystem, ranging from loss of revenues to IP infringement, low quality and lack of certification.

These problems are particularly felt in case of food products, since food safety requirements cannot be guaranteed in the presence of counterfeit products.

This has led to development of a number of mitigation solutions with the goal of allowing discrimination of a real product from a counterfeit one. Known technologies range from RFIDs embedded in the package/product, to marked transparent films applied on the package, to watermarking hidden in the package graphics.

All these known solutions have their advantages and drawbacks, some being more expensive than others, some adding a non-negligible complexity to the production line.

Even though known solutions generally provide for quite satisfactory results, a need is felt in the field to further improve the means for identification and authentication of packages, in particular composite packages for food products.

The aforementioned packages may be sampled during production and may also undergo laboratory tests. A laboratory operator may manually set the laboratory equipment to perform such tests. A known disadvantage of this practice is human errors, e.g. the operator might erroneously set the parameters of the devices and/or might report erroneous parameters in the report.

A need is felt for solutions that may facilitate improving the robustness of the laboratory tests, e.g. by reducing the human error.

### DISCLOSURE OF THE INVENTION

It is therefore an object of the present invention to provide a solution allowing to satisfy the above discussed need, providing a fingerprinting solution being both reliable and cost-efficient.

According to the present invention, a system, a packaging line, an apparatus, a method and a computer program product are provided, as defined in the appended claims.

### BRIEF DESCRIPTION OF THE DRAWINGS

A non-limiting embodiment of the present invention will be described by way of example with reference to the accompanying drawings, in which:
Figure 1 is a schematic representation of a digital fingerprinting system according to an embodiment of the present solution;
Figures 2A-2B, 3 and 4 are examples of dot-print characters used in the digital fingerprinting system of Figure 1;
Figure 5 is a schematic representation of a digital fingerprinting system according to a further embodiment of the present solution;
Figures 6 and 7 are schematic representations of the operation of an autoencoder module in the digital fingerprinting system of Figure 5;
Figure 8 is a schematic depiction of a packaging plant, cooperating with the digital fingerprinting system, according to a further aspect of the present solution; and
Figure 9 is a schematic representation of the present solution according to one or more embodiments.

### BEST MODES FOR CARRYING OUT THE INVENTION

The present solution relates to a digital fingerprinting system, configured to provide digital fingerprints of packages, in particular food composite packages, allowing for identification and authentication of the same packages, e.g. for traceability purposes.

In general, the group of technologies referred to with the term of "fingerprinting", borrowing some terminology from the field of human biometric identification, allow recognition of a specific package or at least the recognition of the specific printing machine used in printing the package or a part thereof.

Any kind of graphic can be used as a fingerprint but usually the focus is on specific codes as QR codes, data-matrices, barcodes, which are specifically printed for this purpose.

However, the reliability of these solutions is heavily affected by the quality of the acquired images and the kind of processing the same images are subjected to; in this connection, these technologies are increasingly becoming viable thanks to the widespread adoption of high-end cameras in user portable electronic devices, such as smartphones.

As will be discussed in detail in the following, the present solution uses for fingerprinting purposes a printed pattern, including a group of symbols, in particular a printed text including a group of (alphanumeric) characters (letters and/or numbers, for example an expiry, or best-before, date, a use-by date and/or a batch code or number printed next to the same date), which are usually already present on the packages, exploiting unique characteristics (in particular variations, such as microvariations or deviations, with respect to printing references) introduced by the printing process. These variations may be due to defects or flaws originating from the printing process.

The generated fingerprints are therefore a digital representation of the printed pattern and constitute a unique identifier of the packages, e.g. for validation or authentication purposes and/or for automatic recognition of the package for laboratory tests (but also for any other purposes at a packaging line or on the consumer side).

General operation of the digital fingerprinting system envisages one or more of the following phases: a code registration phase, subsequent to manufacturing of the packages, during which unique identifiers for the produced packages are stored in a database; and a code verification phase, generally performed by a consumer or by an operator in the packaging line or in a laboratory equipment, during which it is possible to check authenticity of the packages, via identification and processing of the unique identifiers printed on the same packages.

In particular, the registration (or code-extraction) phase generates unique digital codes based on images of the packages containing the printed text acquired by a vision system; the images are processed taking into account the main features of the printed text to generate a descriptor, a digital representation of the same printed text, constituting the unique identifier, or fingerprint, that is used to populate a database.

During the verification (or code-recognition) phase, the system receives an image from a (generally different) camera and generates a descriptor (as in the registration phase) that is compared with those stored within the database: the comparison may envisage computing a distance metric and thresholding the result, to determine whether the descriptor belongs to the database, or not.

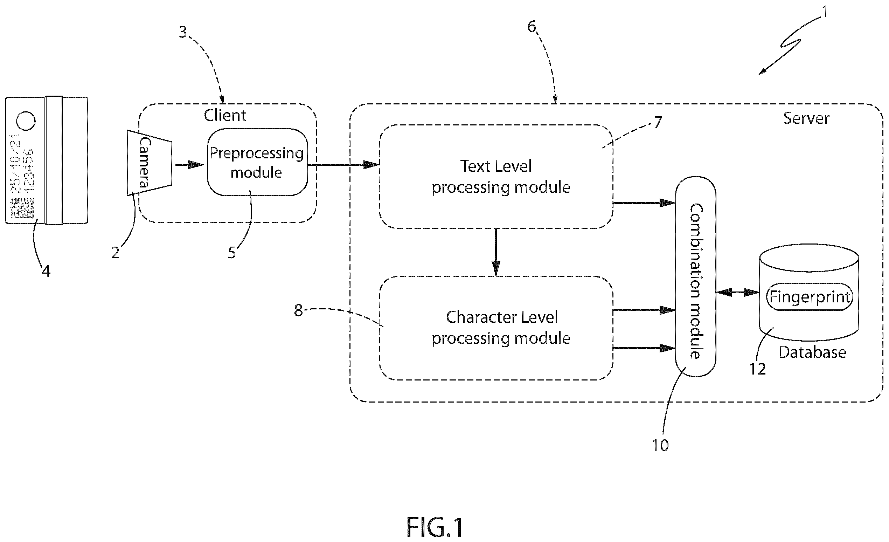

A general architecture of a digital fingerprinting system is shown in Figure 1, where it is denoted with 1 (most elements of the system are the same, both for the registration and the verification operating phases, but they may have a different location depending on the operating phase, e.g. at a client/consumer or at a server side of the system).

The digital fingerprinting system 1 may comprise an imaging device 2 (e.g. a camera or generally a vision system), which is configured to acquire images of a composite package 4 where a printed text is present (e.g. on a top portion of the same composite package 4); in alternative the system 1 may receive the image from an external imaging device 2.

The system 1 comprises a processing apparatus 6, which is configured to receive the images acquired by the imaging device 2.

As shown in the same Figure 1, the acquired images may possibly be subjected to suitable pre-processing, such as cropping and filtering operations, by a pre-processing module 5 coupled to the imaging device 2.

The imaging device 2 and the pre-processing module 5 may be provided in a packaging plant, in the above discussed registration phase, or (as in the embodiment shown in the same Figure 1) in a client device 3, for example a mobile electronic device, such as a smartphone, in the above discussed verification phase.

In particular, during the registration phase, the imaging device 2 is preferably a controlled-light vision system, so that images of the packages are taken with maximum resolution and controlled light and environment conditions; during the verification phase, the imaging device 2 may include any camera device, usually a camera of a mobile electronic device, such as a smartphone, which may capture images with varying quality and lighting conditions.

In the embodiment shown in Figure 1, the processing apparatus 6 is a server located remotely from (and coupled in communication to) the client device 3.

In other possible embodiments, the processing apparatus 6 may be implemented at least partially at the processing plant (for example during the registration phase) and/or in the same mobile electronic device (for example during the verification phase) and/or in a laboratory equipment (for example during a setting phase of the same). That is, the method may be performed both remotely and locally at one or more different devices.

According to a particular embodiment, the processing apparatus 6 comprises a text-level processing module 7, which is configured to perform processing operations on the printed text contained in the acquired images; and a character-level processing module 8, which is configured to perform processing operations at the level of individual alphanumeric characters making up the same printed text.

The operations performed at the text level include general analysis of the acquired images, in order to perform the localization of the printed text to be analyzed, e.g. in terms of its position and size. These operations reduce the computational time used for subsequent operations allowing to focus only on the areas of interest of the acquired images; additionally, these operations may already provide information about the characteristics of the text (e.g. in terms of size, dimension, position and rotation of the text with respect to the package or elements of the same package, e.g. a straw hole or a transversal or longitudinal sealing). These information could already constitute part of a digital descriptor designed to provide the unique identifier associated with the same printed text.

The text-level processing module 7 moreover performs Optical Character Recognition (OCR) operations, that allow to recognize the individual alphanumeric characters contained in the printed text, their positions and characteristics (e.g. size). The information provided by the OCR operations can then be used by other modules to generate the fingerprints.

The character-level processing module 8 is then configured to detect distinguishing features for the individual characters (or of a selected group of the same characters), in particular variations with respect to reference characters, for example defects that have occurred during the printing process of the individual characters.

These features are used to generate a local descriptor (for each considered individual character) indicative of the specific and individual characteristic of the corresponding printed alphanumeric character.

As will be discussed in detail in the following, according to an aspect of the present solution, the character-level processing module 8 exploits artificial intelligence to determine the local descriptors.

According to a possible embodiment, the character-level processing module 8 is based on a machine-learning model. The machine learning model may be a neural network, such as a convolutional neural network (CNN). The machine learning model may be a deep learning model. The deep learning model should be understood to be a model based on deep learning. Deep learning should be understood to be machine learning in which hypotheses take the form of complex algebraic circuits with tunable connection strengths. The word "deep" refers to the fact that the circuits are typically organized into many layers, which means that computation paths from inputs to outputs have several layers.

Possible variations, e.g. defects, of the printed alphanumeric characters (with respect to corresponding ideal or reference characters) that can be used for the generation of the local descriptors include: the position of the alphanumeric characters relative to the general text position; presence of imperfections within the alphanumeric characters; presence of imperfections external but proximate to the alphanumeric characters; size variations, rotations, or translations of the alphanumeric characters.

According to a possible embodiment, the alphanumeric characters are printed on the composite packages 4 with an industrial high-speed printing apparatus, in particular using a dot-printing technique (i.e. each alphanumeric character is comprised of suitably arranged dots aligned in patterns designed to form the outline of the same characters). For example, the printing apparatus may be the physical printing machine commercially known as Domino A550i.

In this case, the above variations may also relate to the shape, size and edge outlines of the individual character dots making up the characters.

The method may comprise identifying, for a number of printed symbols, the dots that make up the printed symbol, and detecting unique symbol features of the individual printed symbols as a function of the identified dots. That is, for the single printed symbol, the dots may be identified and localized in the image, and the unique printed features may be calculated as a function of the variations present in the printed dots. The unique features of the dots may be used to calculate the local descriptors.

The method may comprise generating dot descriptors based on the characteristics of the dots; and generating the local descriptor indicative of the printed symbol features based on information relating to the detected dots, in particular based on the corresponding dot descriptors.

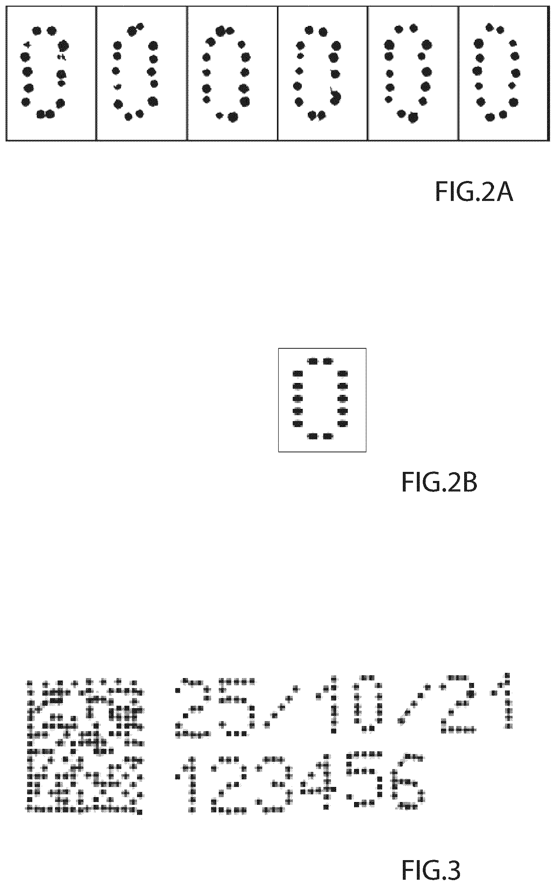

In this respect, Figure 2A shows an example of a character (in this case a '0') printed with the above discussed dot-printing technique; printing defects, such as dot misalignment, different dot size, edge imperfections can be seen in the image, with respect to a printing reference, i.e. an ideal character printed with the same technique (which is exemplary shown in Figure 2B) .

As shown in the above Figure 1, The processing apparatus 6 further comprises a combination module 10, coupled to the text-level processing module 7 and the character-level processing module 8 and configured to combine or aggregate the local descriptors generated by the same character-level processing module 8 (and possible further information provided by the text-level processing module 7) to generate a single global descriptor (i.e., the "fingerprint") that digitally represents the captured and analyzed printed text on the package (thereby providing a unique identifier for the composite package 4) .

In one or more embodiments, the step of processing may comprise:
- recognizing the individual printed symbols,
- detecting, for a number of the recognized printed symbols, e.g. a portion thereof of all of them, unique symbol features of the individual printed symbols due to the printing process, wherein said unique symbol features are variations of the printed symbols with respect to corresponding reference symbols, and
- generating, for each of the number of recognized printed symbols, a local descriptor based on said unique symbol features.

Optionally, the processing may also comprise generating a global descriptor, digitally representing the printed pattern on the composite package 4 as a function of the local descriptors.

The step of recognizing the individual printed symbols may comprise applying a first machine-learning model receiving as an input the received image and providing as an output identifiers indicative of a position of printed symbols within the image as well as the nature of said printed symbols, the model being trained based on a first training dataset of reference images of packages 4 comprising printed symbols. That is, for each printed symbol present in the image, the first machine-learning model is configured to provide as an output a corresponding identifier indicative of the position and nature (e.g. which number or letter) thereof.

The first training dataset may comprise a plurality of images comprising printed symbols thereon, the printed symbols having different dimensions, orientations and/or being made up of dots of different dimensions and/or positions.

Advantageously, the first machine-learning model may allow to automatically recognize where in the image the printed symbols are located. In particular, a rectangular portion of the image may be isolated associated with the nature of the identified printed symbols.

The steps of detecting unique symbol features and generating a local descriptor may comprise applying a second machine-learning model, for example a variational autoencoder with latent vectors being exploited as local descriptors for corresponding printed symbols. The machine-learning model may receive as an input the individual printed symbols, e.g. the identifiers thereof, and may be configured to extract a feature vector sensitive to printing variations of the printed symbols in the printed pattern; wherein the feature vector represents the local descriptor associated with the corresponding printed symbol; and wherein the machine-learning model is trained based on a second training dataset comprising a plurality of printed symbols.

The second training dataset may comprise images of printed symbols taken with different cameras and/or in different light conditions and/or artificially created and/or artificially modified to introduce blurriness and/or a rotation of the printed symbol, wherein each image is associated with a printed symbol. For example, the artificial modification may include processing the test images with perspective perturbation functions, rotations between -20°/+20°, variations in color, contrast and hue and Gaussian blur functions may be applied randomly.

Advantageously, the second machine-learning model may be able to robustly calculate the same local descriptor even if different conditions are found in the image. That is, even if the image taken in the registration phase is different from the image taken in the validation phase (e.g. different light condition or rotation of the package), the local descriptor may be substantially the same.

The generated global descriptor or fingerprint, is used in two different ways according to the operating phase of the digital fingerprinting system 1.

In the registration phase of a new package, the global descriptor is stored inside a database 12 of the digital fingerprinting system 1, after it is checked that the code is not already present inside the same database 12.

The same database 12 may possibly store the generated local descriptors for the individual characters from which the fingerprint is generated; advantageously, as will also be discussed in the following, the database 12 may also store images or representations of the printing references (or ideal characters).

In the verification phase, the fingerprint is compared with the codes stored inside the database 12 and, in case of a correspondence, a positive authentication output is provided (vice-versa, in case of no correspondence, the authentication output is negative).

The result of the comparison between the global descriptor and the unique identifiers stored in the database 12 may be a distance value (evaluated according to a minimum criterium) or a similarity value (evaluated according to a maximum criterium), which may be subjected to a threshold in order to provide a positive or negative output result. For example, local descriptors may be grouped together to return a global best match using a weighted voting mechanism, where each local descriptor votes for its best match.

The global descriptor therefore aggregates the individual local descriptors to generate a general representation that can be compared with other descriptors in a single operation.

This is advantageously implemented, because comparing all local descriptors of each character in the printed text with corresponding identifiers contained within the database 12 might be computationally too onerous. Using the more general representation allows to reduce search time and computational complexity, this being of fundamental importance for the usability of the digital fingerprinting system 1. The processing time for the calculation of the descriptor, the search time for the descriptor in the database 12, the memory occupation during the calculations and making the system scalable in order to search efficiently and independently from the number of descriptors contained in the database 12 are all factors that are taken into consideration by the discussed digital fingerprinting system 1.

Aggregated global descriptors may also be compressed with various techniques (principal component analysis, quantization, product quantization) in order to further reduce database size and further speed-up search time in the database 12.

A first embodiment for the character-level processing module 8, which envisages use of a deep machine learning model, is now disclosed in more details.

The basic idea in this case is to exploit the backbone of a deep classification network trained to extract a feature vector highly sensitive to the variations, e.g. flaws, of each printed text. In particular, the values in the feature maps of one of the final layers (more in particular, of a penultimate layer) of the deep neural network may be used as a fingerprint for identification and authentication purposes.

In more details, a deep learning neural network is implemented for identification of the characters in the printed text and generation of a corresponding local descriptor (feature vector).

In a possible implementation, the architecture for the "classifier" is for example a ResNet34 classification model. The output of the model is a vector of length N representing the probability of belonging to the n-th class after applying a softmax function (each class representing a corresponding reference alphanumeric character).

In particular, the model is trained and converted from a classification task to a ranking/retrieval task, where the neural network directly generates at the output a descriptor for the corresponding alphanumeric character.

In a possible implementation, the training phase is divided into two main processes: classifier training and ranking/retrieval training, in particular by triplet loss.

The dataset used for training includes a plurality of images of test packages (in particular of a top portion thereof) acquired from different mobile-device cameras (so that, after verifying the goodness of the algorithms, the system can also work with photos taken by mobile devices). The images that are collected through these devices are used as "test" images, to be compared to reference images, which are used to populate the database 12.

These reference images are acquired by a controlled-light vision system, so that all images are acquired under the same lighting conditions, at a controlled illumination; in this way, the presence of bias in the images due to the environment in which they are acquired (reflections, low contrast and similar) that could negatively affect the development of the recognition system is avoided.

In particular, as shown in the example of Figure 3, the top portion of the test packages contains a DPM (Direct Part Mark) code and a two-line script representing an exemplary expiry date and a batch number (a sequence of random characters); the DPM is unique within the dataset collection and it serves as validation data, since it is possible to discriminate every single package by reading this code (the DPM is therefore used during the testing phase of the system, in order to check the correct identification of the fingerprint of each individual package).

In order to increase the robustness of the generated descriptor, a series of augmentation functions may also be applied to the test images: in particular, perspective perturbation functions, rotations between -20°/+20°, variations in color, contrast and hue and Gaussian blur functions may be applied randomly.

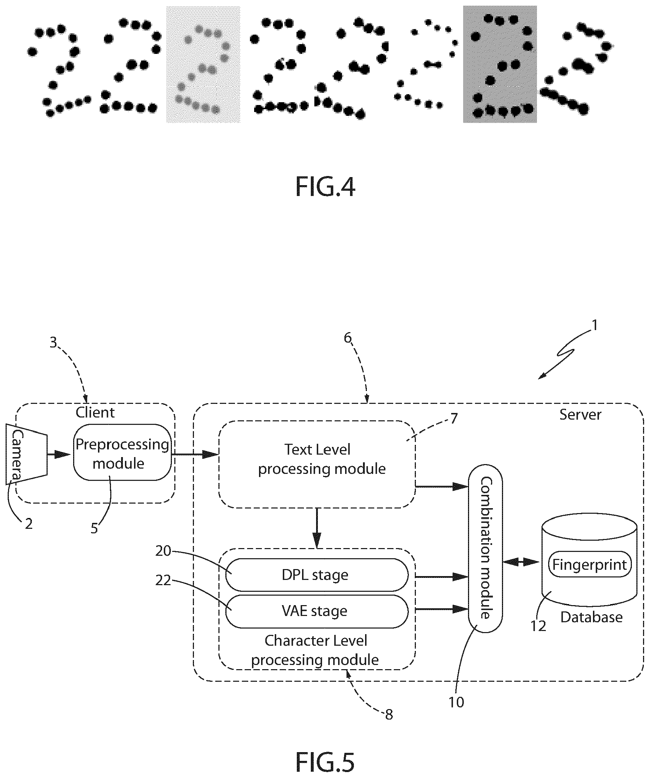

Examples of these perturbations are shown in Figure 4 for a single exemplary alphanumeric character (in the example a '2' digit).

In more details, during the classifier training, the model is trained as if it were a real classifier (the model providing at the output the class to which an input image belongs). In this case, each class corresponds to a specific DPM code.

This phase is implemented to improve and speed up the ranking/retrieval training process by triplet loss, which occurs after a certain level of accuracy of the classifier has been reached.

In the ranking/retrieval training, the last prediction layer is eliminated so that the penultimate layer is used to output the descriptor of the character (the size of the descriptor for each character is for example 512 values).

The train through triplet loss occurs using three main elements (in this case images) : the reference, the positive and the negative. The reference image represents the query image that the neural network is processing at that moment and to which some augmentation function can be applied; the positive image represents the image that belongs to the same class of the reference but to which no augmentation has been applied; and the negative image represents a different class to which no augmentation has been applied.

During the training process, the network measures the distance of the descriptors (for example via a L2 distance or any other suitable metric or statistic methodology) between the reference-positive and reference-negative and tries to decrease the former and increase the latter, so that the difference between the two distances is greater than a predetermined margin. In this manner, similar descriptors will be close to each other, while different descriptors will be far from each other.

In order to verify that the training phase has produced a valid model, besides testing the performances on the test dataset, the Grad-CAM technique that allows to visualize on the input images what "features" the neural network uses in order to discriminate a result in comparison to another one can be applied.

In particular, to perform the test phase it is required to generate the database by determining the global descriptor of reference images (images taken with the controlled light vision system) and associating to that descriptor the DPM of the corresponding physical package.

During the matching phase at runtime query images (taken from different cameras, e.g. smartphone cameras) are input to the digital fingerprinting system 1 and their global descriptors are calculated and compared with those present in the database 12. Each character will vote for a DPM present in the database weighted on the basis of the similarity of the descriptors; and in the case of a positive matching (where single character results are aggregated together to return a global best match using a voting mechanism, i.e. a histogram) the correct code will be returned.

It is noted that during the process of creating the reference database, the presence of other defects or information external to the printed characters (which are in this case naturally taken into consideration by the artificial intelligence operation) allows to increase the information content that is associated with the fingerprint.

Tests performed by the Applicant have shown the possibility to obtain a perfect 100% accuracy in the identification and authentication of the test packages, with low execution times (indeed, using a deep neural network allows to perform the same operations on a batch of images in a single inference).

A second embodiment of the character-level processing module 8, which is based on the characteristics of the autoencoder (AE) family of compression models, is now disclosed.

As it is known, in an autoencoder, an encoder network compresses a vector embedded in an input space into a so-called latent vector embedded in a smaller latent space, in such a way that with an inverse function (the decoder) it is possible to reconstruct the original signal.

In this second embodiment, latent vectors are exploited as fingerprints, as they contain all information required to reconstruct the characters, together with their variations (e.g., flaws and defects).

In particular, this second embodiment specifically exploits the dot-printing technique used to apply the printed text on the packages, in particular the fact that each character is composed of a number of suitably arranged dots having specific and characterizing features.

As schematically shown in Figure 5, the character-level processing module 8 in this case comprises: a digit point localization (DPL) stage 20, which is configured to detect in the acquired images the dots that make up the alphanumeric characters and generate a dot descriptor based on the characteristics of the same dots; and an auto-encoder stage 22, in particular a variational auto encoder (VAE), which is configured to receive from the digit point localization stage 20 information relating to the detected dots, in particular the corresponding dot descriptors, and generate a local descriptor for each character, indicative of the character features based on the same dot descriptors.

In more details, the digit point localization stage 20 may be configured to determine the center position (e.g. in terms of x and y coordinates in the character image) and the radius of each dot making up the characters.

The resulting descriptor may be, for example, a descriptor MxNx3, where M represents the number of characters that make up the printed text, N the number of dots that make up each character and 3 represents the coordinates in x and y and the radius of the dots.

In a possible embodiment, the digit point localization stage 20 is implemented with deep learning techniques, to be robust to variations in illumination, environment and to speed-up computational process.

The auto-encoder stage 22 returns for each character a respective descriptor that has the size of the latent space (for example, 512).

To generate the global descriptor for identification of the composite packages 4, the descriptors coming from the digit point localization stage 20 and the auto-encoder stage 22 may be combined, e.g. concatenated.

During the verification phase the global descriptor calculated at runtime is compared with those saved inside the database 12, producing a list of results ordered on the basis of the distance, e.g. calculated using the L2 metric.

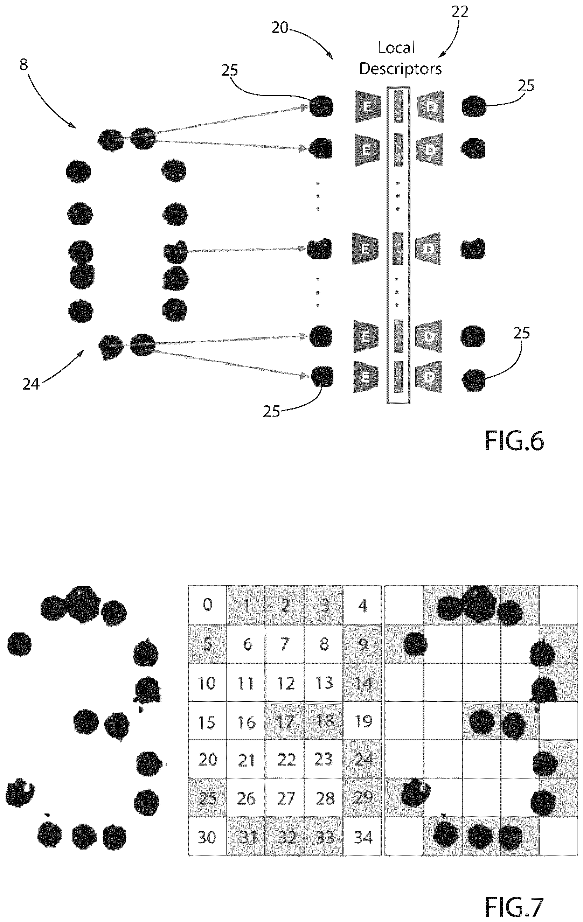

Figure 6 shows a schematic representation of the operation of the character-level processing module 8 in this second embodiment.

An image 24 that contains the character (in this example a '0') is passed to the digit point localization stage 20, which extrapolates the dots 25 that make up the character; the dots are resized and merged in a batch so that they can be passed to the auto-encoder stage 22.

For each element of the batch a dot descriptor is extrapolated that will be used to compose the global descriptor of the image; moreover the correct reconstruction of the dots generated is verified by the decoder.

Tests performed by the Applicant have shown that the error committed during the reconstruction phase is low and therefore the defects and anomalies of the dots 25 are preserved; it is not possible, however, to describe the anomalies that are external to the position of the dots and that could help during the process of creating the fingerprint (contrary to the previously discussed first embodiment of the character-level processing module 8, based on a deep neural network).

In more details, the deep-learning architecture for the digit point localization stage 20 may envisage generation of two output vectors, a center vector and a radius vector, being indicative of an offset positioning and radius deviation with respect to a printing reference, for each dot that compose each individual character.

In this respect, Figure 7 shows a representation of an exemplary alphanumeric character, in this case a '3' digit, which is in this case composed by dots arranged on a matrix 7x5; to each element of the matrix a unique identifier is assigned, for simplicity being numbered from 0 to 34. Depending on the specific character, certain cells of the matrix will be activated and then each character will always have the same active dots with the same identifier.

The center vector describes the offset centers of the dots that make up the digits with respect to the center of its corresponding cell. The output is resized into a 7x5x2 matrix where the index in width and the index in height of the matrix 7x5 correspond to a specific dot identifier and the depth represents the x-coordinate and the y-coordinate of the center, respectively.

The radius vector corresponds to a 7x5 matrix, the index in width and the index in height again corresponding to the current dot identifier, and the value contained within the cell corresponding to the radius of the dot of the character.

The above deep-learning architecture can be trained using a training dataset of artificially created images, with characters having a random distribution and type of flaws in their dot arrangement with respect to a "perfect" character that does not present any type of defect (during the character creation phase, the position and the size of the dots can be tracked, so that for each image the necessary annotations can be generated for the training process) .

Tests performed by the Applicant have shown the possibility, also for this second embodiment, to obtain reliable identification and authentication results, with low execution times.

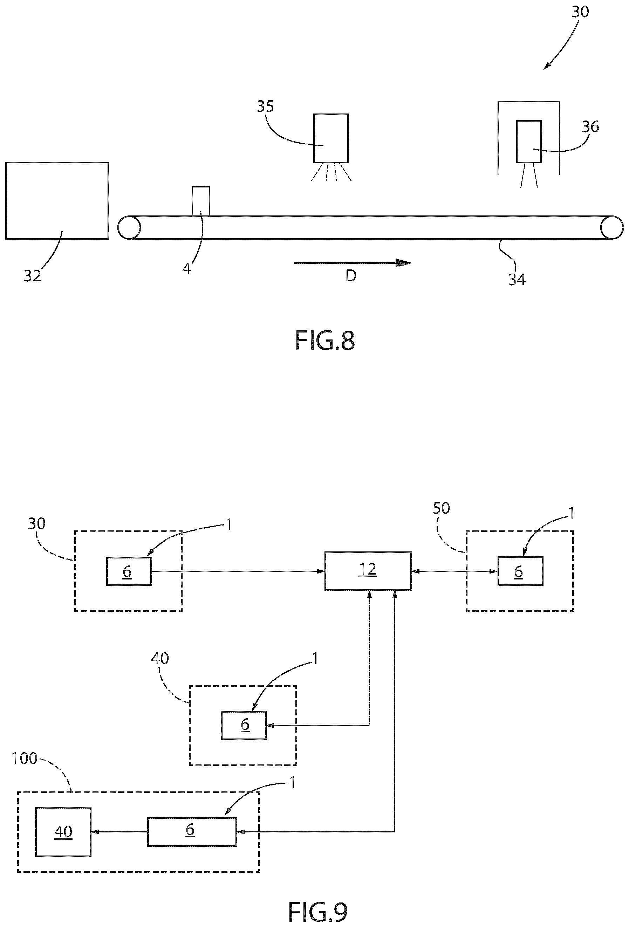

According to a possible embodiment, as shown schematically in Figure 8, the above discussed digital fingerprinting system 1 can cooperate with (or be part of) a packaging line 30, the packaging plant 30 being configured to form sealed composite packages 4 filled with a pourable food product.

The packaging line 30 may comprise a packaging apparatus 32 for forming a plurality of sealed composite packages 4 from a multilayer packaging material, in particular being provided in the form of a web.

In a manner not shown, the packaging apparatus 32 may comprise:
- a conveying device for advancing (in a known manner) the web along a web advancement path to a forming station, at which, in use, the web is formed into a tube;
- an isolation chamber having an inner environment, in particular an inner sterile environment containing a sterile gas, and being separated from an (hostile) outer environment;
- a tube forming and sealing device configured to form the tube from the, in use, advancing web within the inner environment and to longitudinally seal the tube within the inner environment;
- a filling device for filling the tube with the pourable product; and
- a package forming apparatus configured to form, to transversally seal and to transversally cut the, in use, advancing tube for forming the composite packages.

The filled and sealed composite packages 4 are transferred to an output conveyor 34, for example a conveyor belt, having an advancement direction D (shown schematically in Figure 8).

A printer 35 is arranged at the output conveyor 34 and is configured to print the printed text on the composite packages 4, e.g. including the expiry or best before date and the batch number.

The packaging line 30 may further comprise a vision system 36 (corresponding to the imaging device 2 of the digital fingerprinting system 1, operating in the code registration phase), which is arranged downstream of the printer 35 along the advancement direction D of the output conveyor 34.

The vision system 36 is configured to acquire the images of the portion of the composite packages 4 with the printed text, so that the fingerprint for the same composite packages 4 may be extracted and stored in the database 12 of the digital fingerprinting system 1, as previously discussed in detail.

The advantages of the present solution will be clear from the foregoing description.

In particular, the digital fingerprinting system 1 allows to identify unique characteristics within seemingly similar packages, leveraging variations of printing processes in order to assign a unique identifier to each product.

A dedicated printing apparatus assigning unique codes (e.g. bar codes or similar) or providing additional prints, images or graphic modifications to every package is therefore not required for identification and authentication purposes, therefore removing the complexity and costs associated with handling these additional printing processes.

The fingerprinting system 1 provides reliable identification and authentication results, with low processing times.

Advantageously, the digital fingerprinting system 1 provides reliable results also starting from images of the printed portion of the packages acquired via commonly available camera devices, such as those of commonly available consumer electronic mobile devices, like smartphones.

The printed patterns on the packages may represent group of characters such as product data, e.g. one or more of: an expiry, or best-before, date; a use-by date; a batch code or number. The group of characters may be identical for a batch of packages, e.g. the packages produced on the same day may have the same expiry or best-before date.

The method may comprise, during a registration phase (e.g. performed in a packaging line):
- identifying the group of characters in the image (e.g. by recognizing the best before date or codes), and
- storing in the database 12 the extracted fingerprint as well as the group of characters associated with the fingerprint.

The method may comprise, during an extraction of the fingerprint from the database 12:
- identifying the group of characters in the image,
- comparing the identified group of characters to groups of characters present in the database 12, and
- in case of a match, comparing the extracted fingerprint to the stored fingerprints associated with the group of characters stored in the database 12.

That is, a first search may be performed in the database 12 to isolate the fingerprints that have the same group of characters, e.g. product data, as the package being verified. Only after such groups of characters are found in the database 12, the comparing of fingerprints may take place.

Advantageously, this may reduce the search times and as a result also the processing time of the validation. Every day, thousands of packages are produced and the database may be configured to store every fingerprint. A comparison of the extracted fingerprint to every fingerprint in the database could be time consuming. Thanks to the association of the product data, the database may be subdivided in batches. The extracted fingerprint may then be compared only to those in the correct batch.

According to one embodiment, the method may comprise, in a registration phase, storing the extracted fingerprint in the database 12 and storing one or more of:
- production data associated to the production of the package 4, and/or
- one or more setting parameters indicative of tests to be performed on the package associated with the stored fingerprint.

The production data may comprise e.g. a product type such as "Fresh Milk 1.5% Fat". Based on the production data a laboratory equipment device may be able to calculate or retrieve parameter settings to perform laboratory tests.

Advantageously, the data associated with the fingerprint may be used to automatically set parameters of a testing device or any laboratory equipment device. Advantageously, e.g. at the time of production of the packages and of registration of the fingerprint, it may be decided which tests can be performed on the package and which parameters to use to set up the laboratory equipment.

In a verification phase, the method may comprise comparing the extracted fingerprint to fingerprints stored in the database 12, and if a match is found extracting the data, e.g. the setting parameters, associated with the matched stored fingerprint.

The method may further comprise transmitting setting signals calculated as a function of the extracted data associated with the matched stored fingerprint, e.g. to a laboratory equipment device 40.

Advantageously, by means of a simple image, the laboratory equipment devices may be automatically set, in particular the tests performed may be tailored to the specific package. Advantageously, this method may facilitate minimizing human error.

Figure 9 exemplifies a possible implementation of the described solution.

One or more digital fingerprinting systems 1 may exist comprising a processing apparatus 6 configured to implement the method according to the present invention. The system 1 can be coupled with or comprise a vision system 36 configured to acquire an image and transmit said image to the processing apparatus 6. The computer program product discussed previously is implemented by the processing apparatus 6 of digital fingerprinting system 1.

A digital fingerprinting system 1 may be implemented by means of a smart device, such as a smartphone 50.

The packaging line 30 may comprise the digital fingerprinting system 1, a packaging apparatus 32 configured to form a plurality of composite packages 4 from a multilayer packaging material; an output conveyor 34, configured to carry composite packages 4 from the packaging apparatus 32 along an advancement direction D; and a printer 35 arranged at the output conveyor 34 and configured to print the printed text on the composite packages 4. During the registration phase, the vision system 36 may take an image of packages produced in the packaging line 30.

For a number of packages, e.g. the packages that are sampled in a later stage, production data and/or setting parameters can be associated with the extracted fingerprint and stored in the database 12 with the respective fingerprint. That is, after the fingerprint is determined for a package 4, the production data relative to that package 4 and/or setting parameters for laboratory equipment devices configured to test that package 4 can be stored in association with the fingerprint.

The instant invention relates to an apparatus 100 comprising a laboratory equipment device 40 and the digital fingerprinting system 1, the system 1 coupled with the laboratory equipment device 40.

The system 1 is configured for:
- comparing the extracted fingerprint to fingerprints stored in a database 12, and
- if a match is found, extracting data associated with the matched stored fingerprint, the extracted data comprising production data associated to the production of the package 4 and/or one or more setting parameters indicative of tests to be performed on the package 4.

The system 1 may transmit a setting signal calculated as a function of the extracted data.

The laboratory equipment device 40 is configured to perform a test on a package 4 as a function of the extracted data associated to the package 4. For example, the device 40 can be automatically set by the setting signal.

For example, the laboratory equipment device 40 may comprise an instrument for product composition analysis. In this case, product type-dependent instrument parameters settings are, for example, the calibrations of: Fat / Protein / Lactose (/etc.) content, Total Solids, Lean Solids, Freezing Point, Acidity, Density, etc., screening on specific targets for adulteration. In addition or in alternative, the laboratory equipment device 40 may comprise an instrument for a pH test. In this case the parameter settings are related to the range of acceptance (pH min and pH max) for the pH value for a specific product type. In addition or in alternative, the laboratory equipment device 40 may comprise a RMD (Rapid Microbiological Detection) based on the measure of ATP (Adenosine Tri Phosphate, the energy molecule in all living organisms). The product type may identify the specific threshold value to recognize if living organisms are growing inside the product under test (this is measured in RLU = Relative Luminescence Units) .Clearly, changes may be made to the solution described herein without, however, departing from the scope of protection as defined in the accompanying claims.

For example, according to an aspect of the present solution, fingerprints may be stored in the database 12 grouped according to a best before date printed on the respective composite packages 4.

Accordingly, the operations of retrieving the fingerprints from the database 12 to check authenticity of any given fingerprint generated for a package under examination may advantageously be limited to the group of fingerprints stored in the database 12 having the same best before date (thereby considerably reducing the time required for the operations to be performed). During the verification phase, any suitable means may be used to read the best before date and thereby properly indexing the database 12.

Moreover, it is underlined that the discussed solution can be applied to provide traceability of any kind of product, since it exploits the analysis of printed characters (such as the best before date or batch number) that are generally applied on industrial products.

## Claims

1. A digital fingerprinting method (1), comprising:
receiving an image of a portion of a composite package (4) acquired by an imaging device (2) and having a printed pattern including a group of printed symbols;
identifying the printed symbols in the image; and
processing said image to extract a fingerprint of the composite package (4) constituting a unique identifier of the composite package (4), based on unique printing features of said printed symbols.

2. The method according to claim 1, wherein the unique printing features include variations of the printed symbols with respect to printing references, the variations introduced by a corresponding printing process.

3. The method according to claim 1 or 2, comprising, in a registration phase, storing the extracted fingerprint in a database (12), configured to store fingerprints associated with the composite packages (4); and preferably, storing production data associated with the production of the package (4) and/or one or more setting parameters indicative of tests to be performed on the package (4) associated with the stored fingerprint.

4. The method according to any of the preceding claims, comprising in a verification phase:
- comparing the extracted fingerprint to fingerprints stored in a database (12) configured to store fingerprints associated with the composite packages (4)
- if a match is found, verifying the identity of the package (4),
- preferably, extracting data associated with the matched stored fingerprint.

5. The method according to any of the preceding claims, wherein processing comprises:
- recognizing the individual printed symbols,
- detecting, for a number of the recognized printed symbols, unique symbol features of the individual printed symbols due to the printing process, wherein said unique symbol features are variations of the printed symbols with respect to corresponding reference symbols,
- generating, for each of the number of recognized printed symbols, a local descriptor based on said unique symbol features,
- preferably, generating a global descriptor, digitally representing the printed pattern on the composite package (4) as a function of the local descriptors.

6. The method according to claim 5, wherein the step of recognizing the individual printed symbols comprises applying a first machine-learning model receiving as an input the image and providing as an output identifiers indicative of the position of the printed symbols within the image as well as the nature of said printed symbols, the first machine-learning model being trained based on a first training dataset of reference images of packages (4) comprising printed symbols.

7. The method according to claim 5 or claim 6, wherein the steps of detecting unique symbol features and generating a local descriptor comprise applying a second machine-learning model, preferably a variational autoencoder with latent vectors being exploited as local descriptors for corresponding printed symbols, the machine-learning model receiving as an input the individual printed symbol and being configured to extract a feature vector sensitive to printing variations of the printed symbols in the printed pattern; wherein the feature vector represents the local descriptor associated with the corresponding printed symbol; and wherein the second machine-learning model is trained based on a second training dataset comprising a plurality of printed symbols.

8. The method according to claim 6 or claim 7, wherein:
- the first training dataset comprises a plurality of images comprising printed symbols thereon, the printed symbols having different dimensions, orientations and/or being made up of dots of different dimensions and/or positions; and/or
- the second training dataset comprises images of printed symbols taken with different cameras and/or in different light conditions and/or artificially created and/or artificially modified to introduce blurriness and/or a rotation of the printed symbols, wherein each image is associated with a printed symbol.

9. The method according to any of the preceding claims, wherein the printed symbols are printed on the composite package (4) with an industrial high-speed printing apparatus, using a dot-printing technique, each printed symbol being comprised of dots aligned in patterns; wherein the unique printing features include variations introduced by the printing process relating to a shape, size and/or edge outline of individual dots making up the printed symbols.

10. The method according to claim 9, comprising determining center positions, in terms of coordinates in the acquired image, and radius of each dot making up the printed symbols.

11. The method according to any of the preceding claims, wherein the printed pattern is a printed text including a group of characters indicative of product data such as one or more of: an expiry, or best-before, date; a use-by date; a batch code or number; and wherein the method comprises:
- in a registration phase, identifying the group of characters in the image and storing, in a database (12), the extracted fingerprint as well as the group of characters, and/or
- in a verification phase, identifying the group of characters in the image, comparing the identified group of characters to groups of characters present in the database (12), and in case of a match comparing the extracted fingerprint to the stored fingerprints associated with the matched group of characters.

12. A computer program product, comprising computer instructions configured to implement, when executed by one or more processors of a processing system, the method according to any one of the preceding claims.

13. A digital fingerprinting system (1) configured to provide digital fingerprints of composite packages (4), comprising a processing apparatus (6) configured to implement the method according to any of claims 1-11.

14. The digital fingerprinting system (1) of the preceding claim, further comprising a vision system (36) configured to acquire an image and transmit said image to the processing apparatus (6).

15. The digital fingerprinting system (1) of claim 13 or claim 14, wherein the processing apparatus (6) is configured for:
- comparing the extracted fingerprint to fingerprints stored in a database (12),
- if a match is found, extracting data associated with the matched stored fingerprint, the extracted data comprising production data associated to the production of the package (4) and/or one or more setting parameters indicative of tests to be performed on the package (4).

16. A packaging line (30), comprising:
- the digital fingerprinting system (1) according to claim 13 or claim 14,
- a packaging apparatus (32) configured to form a plurality of composite packages (4) from a multilayer packaging material;
- an output conveyor (34), configured to carry composite packages (4) from the packaging apparatus (32) along an advancement direction (D); and
- a printer (35) arranged at the output conveyor (34) and configured to print the printed text on the composite packages (4).

17. An apparatus (100), comprising a laboratory equipment device (40), configured to perform tests on a number of packages (4), and the digital fingerprinting system (1) according to claim 15, wherein the laboratory equipment device (40) is configured to perform a test on a package (4) as a function of the extracted data associated to the package (4).
